Europäisches Patentamt

European Patent Office

Office européen des brevets

(19)

(11) Veröffentlichungsnummer : **0 244 418**
**B1**

(12) **EUROPÄISCHE PATENTSCHRIFT**

(45) Veröffentlichungstag der Patentschrift :
09.11.88

(51) Int. Cl.⁴ : **B 62 D 1/26**, B 62 D 5/093,
A 01 B 69/00

(21) Anmeldenummer : 86902362.2

(22) Anmeldetag : 08.03.86

(86) Internationale Anmeldenummer :
PCT/EP 86/00124

(87) Internationale Veröffentlichungsnummer :
WO/8605455 (25.09.86 Gazette 86/21)

(54) DRUCKMITTELSTEUEREINRICHTUNG.

(30) Priorität : 21.03.85 PCT/EP85/00119

(43) Veröffentlichungstag der Anmeldung :
11.11.87 Patentblatt 87/46

(45) Bekanntmachung des Hinweises auf die Patenterteilung : 09.11.88 Patentblatt 88/45

(84) Benannte Vertragsstaaten :
DE FR IT

(56) Entgegenhaltungen :
DE-A- 2 654 366
FR-A- 2 371 332
FR-A- 2 387 365
FR-A- 2 395 872
FR-A- 2 415 566

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : TISCHER, Werner
Im Brühl 33
D-7072 Heubach Lautern (DE)

(74) Vertreter : Raue, Reimund
Zahnradfabrik Friedrichshafen AG Löwentaler
Strasse 100 Postfach 2520
D-7990 Friedrichshafen 1 (DE)

## Beschreibung

Die Erfindung betrifft eine Druckmittelsteuereinrichtung zur Steuerung eines doppelt wirkenden Servomotors einer Fahrzeuglenkung nach dem Oberbegriff des Anspruches 1.

Derartige Druckmittelsteuereinrichtungen werden vor allem verwendet für die Lenkung von selbstfahrenden, landwirtschaftlichen Arbeitsmaschinen und Fahrzeugen, beispielsweise Erntemaschinen, die ein Tastsystem zur automatischen Seitenführung entlang einer Leitlinie besitzen. Solche Fahrzeuge werden dabei wahlweise über einen mit einer Hydroventileinrichtung (z. B. DE-OS 26 54 366) versehenen Lenkautomaten oder über die hydrostatische Lenkanlage gelenkt.

Bei einer bekannten Kombination aus einer hydrostatischen Lenkung nach der DE-PS 27 16 868 mit einem Lenkautomaten, der eine Hydroventileinrichtung nach der DE-OS 26 54 366 enthält, fließt in der Neutralstellung des Lenksteuerventils der hydrostatischen Lenkung ein Pilotstrom zu dem Lenkautomaten. (Ein solcher Pilotstrom, der zur Anregelung des Arbeitsdruckes dient, fließt in der hydrostatischen Lenkung gemäß der DE-PS 27 16 868 direkt zum Druckmittelbehälter zurück.) Dieser Pilotstrom reicht zu einer Versorgung des Lenkautomaten nicht in allen Betriebszuständen aus, da bei einer automatischen Lenkung durch den Lenkautomaten die gewünschte Stellgeschwindigkeit mit dem Pilotstrom alleine nicht erreicht werden kann.

Der Erfindung liegt die Aufgabe zugrunde, eine Druckmittelsteuereinrichtung zur Steuerung eines doppelt wirkenden Servomotors, der sowohl über eine hydrostatische Lenkung als auch über einen Lenkautomaten betätigbar ist, derart zu verbessern, daß ein Lenkvorgang über den Lenkautomaten mit einer zufriedenstellenden Stellgeschwindigkeit erfolgt. Andererseits soll dem Lenkautomaten nur der Arbeitsstrom zur Verfügung gestellt werden, der zu der jeweiligen Betätigungsgeschwindigkeit erforderlich ist.

Diese Aufgabe wird erfindungsgemäß durch die in Anspruch 1 gekennzeichnete Druckmittelsteuereinrichtung gelöst.

Durch die Anordnung des Magnetventils und des Schaltventils zwischen der hydrostatischen Lenkung und dem Lenkautomaten wird erreicht, daß der Lenkautomat bei einem automatischen Lenkvorgang je nach der für den Lenkvorgang erforderlichen Druckmittelmenge nur mit dem Pilotstrom der hydrostatischen Lenkung oder aber mit dem gesamten Druckmittelstrom der Servopumpe versorgt werden kann. Dadurch ist immer eine ausreichende Stellgeschwindigkeit des Servomotors möglich. Der kleinste zu dem Lenkautomaten strömende Druckmittelstrom besteht aus dem Pilotstrom. Durch diese Möglichkeit wird eine große Energieeinsparung erzielt. Außerdem ist es möglich, daß bei nicht betätigtem Servomotor nahezu der gesamte Druckmittelstrom der Servopumpe einem eventuell vorhandenen Zweitverbraucher, beispielsweise einer Hubhydraulik, zur Verfügung gestellt werden kann.

Die Anordnung des Strombegrenzungsventils in der zu dem Lenkautomaten führenden Verbindungsleitung bewirkt, daß nur der für einen jeweiligen Lenkvorgang des Lenkautomaten benötigte Druckmittelstrom zu dem Lenkautomaten fließt. Dadurch ist auch bei einem Lenkvorgang eine Energieeinsparung möglich oder ein großer Reststrom kann einem Zweitverbraucher zugeführt werden.

Durch die Anordnung eines zweiten Magnetventiles in den von dem Lenksteuerventil zu dem Servomotor führenden Arbeitsleitungen ist die Verwendung einer hydrostatischen Lenkung mit offener Mitte möglich. Dadurch kann die Einrichtung auch für schnellaufende Fahrzeuge verwendet werden.

Im folgenden wird die Erfindung anhand zweier in einer Zeichnung dargestellter Ausführungsbeispiele näher erläutert.

Es zeigt

Fig. 1 die erfindungsgemäße Druckmittelsteuereinrichtung mit einer hydrostatischen Lenkung mit geschlossener Mitte,

Fig. 2 die gleiche Einrichtung, jedoch mit einer hydrostatischen Lenkung mit offener Mitte.

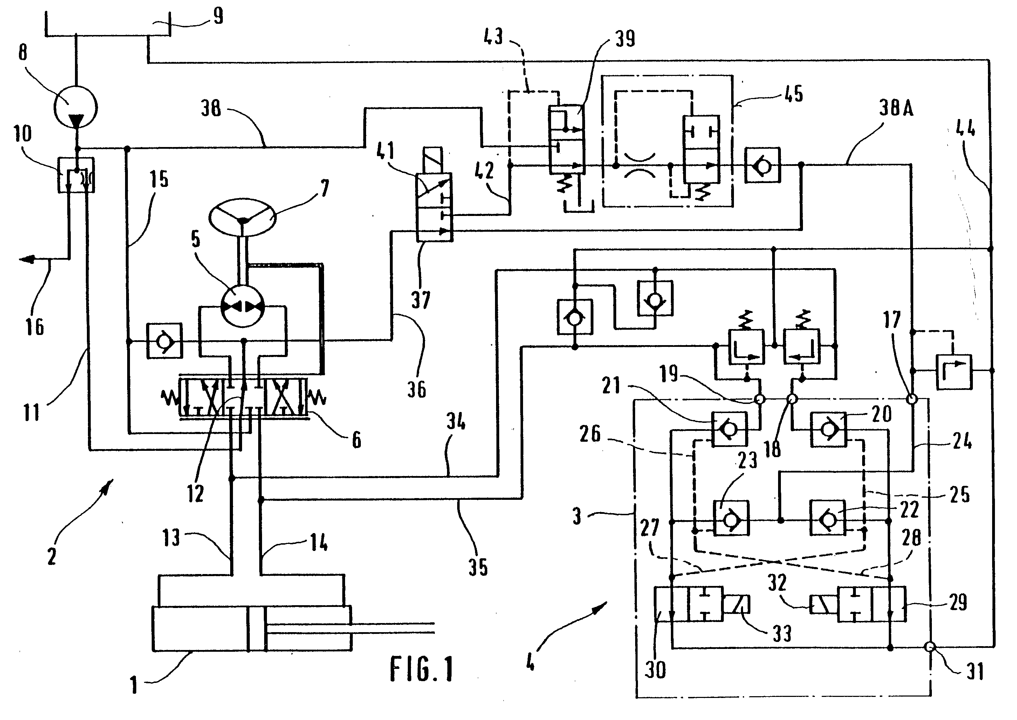

Ein Servomotor 1 wird einerseits über eine hydrostatische Lenkung 2 und andererseits über einen mit einer Hydroventileinrichtung 3 versehenen Lenkautomaten 4 betätigt. Die hydrostatische Lenkung 2 enthält eine Dosiereinrichtung 5 und ein Lenksteuerventil 6, die beide über ein Lenkhandrad 7 betätigbar sind. Die hydrostatische Lenkung 2 wird von einer Servopumpe 8 aus einem Druckmittelbehälter 9 mit Druckmittel versorgt. Dazu wird dem Lenksteuerventil 6 einerseits über ein Stromteilventil 10 und eine Leitung 11 ein Pilotstrom zugeführt, der in der Neutralstellung des Lenksteuerventils 6 dieses durch einen Pilotstromkanal 12 durchströmt. Das Lenksteuerventil 6 des Ausführungsbeispieles der Fig. 1 ist mit geschlossener Mitte ausgeführt, d. h., daß die zu dem Servomotor 1 führenden Leitungen 13 und 14 in der Neutralstellung des Lenksteuerventils 6 gesperrt sind. Vor dem Stromteilventil 10 zweigt eine Arbeitsleitung 15 zu dem Lenksteuerventil 6 ab. An das Stromteilventil 10 ist außer der Leitung 11 noch eine Leitung 16 angeschlossen, die zu einem nicht dargestellten Zweitverbraucher führt.

Von dem Lenkautomaten 4 ist in der Zeichnung nur die Hydroventileinrichtung 3 dargestellt, da die anderen Teile, z. B. das Tastsystem mit Richtungsgeber und Fühlern, nicht erfindungswesentlich sind.

Die Hydroventileinrichtung 3 weist einen Zulaufanschluß 17 und zwei Arbeitsleitungsanschlüsse 18 und 19 auf. Die Hydroventileinrichtung 3 enthält zwei symmetrisch aufgebaute Ventilgruppen, von denen jede einem der Arbeitsleitungsanschlüsse 18 bzw. 19 zugeordnet ist. Den beiden Arbeitsleitungsanschlüssen 18 und 19 ist innerhalb der Hydroventileinrichtung 3 je ein Rückschlagventil 20 bzw. 21 unmittelbar vorgeschaltet. Die beiden Rückschlagventile 20 und 21 sind in Richtung auf die Arbeitsleitungsanschlüsse 18 und 19 aufsteuerbar. Von dem jeweiligen Arbeitsanschluß 18 bzw. 19 aus gesehen, liegt hinter dem jeweils zugehörigen Rückschlagventil 20 bzw. 21 ein als Rückschlagventil ausgebildetes Zulaufventil 22 bzw. 23. Die Zulaufseiten der beiden Zulaufventile 22 und 23 sind über eine gemeinsame Zulaufleitung 24 mit dem Zulaufanschluß 17 verbunden.

Die Zulaufseiten der Rückschlagventile 20 und 21 und die Ablaufseiten der Zulaufventile 22 und 23 sind über Steuerleitungen 25 bzw. 26 miteinander verbunden. Außerdem stehen die Steuerleitungen 25 und 26, die für die Steuerung jeweils einer Ventilgruppe zuständig sind, mit der Ablaufseite des jeweils zur anderen Ventilgruppe gehörenden Zulaufventils 23 bzw. 22 über Steuerleitungen 27 bzw. 28 in Verbindung.

Zu jeder der beiden symmetrischen Ventilgruppen gehört ein Ablaufsperrventil 29 bzw. 30, über das die jeweilige Ablaufseite der Zulaufventile 22 bzw. 23 und damit auch die Steuerleitungen 27 bzw. 28 mit einem Rücklaufanschluß 31 der Hydroventileinrichtung 3 verbunden werden können.

Die Betätigung der Ablaufsperrventile 29 und 30 erfolgt zweckmäßigerweise über Elektromagneten 32 bzw. 33. Die Elektromagneten 32 und 33 werden über das nicht dargestellte Tastsystem erregt.

An die Arbeitsleitungsanschlüsse 18 und 19 sind Arbeitsleitungen 34 und 35 angeschlossen, die mit den zu dem Servomotor 1 führenden Leitungen 13 und 14 in Verbindung stehen.

In Fortsetzung der Leitung 11 und des Pilotstromkanals 12 führt von dem Lenksteuerventil 6 eine Pilotstromleitung 36 zu dem Zulaufanschluß 17 der Hydroventileinrichtung 3. In der Pilotstromleitung 36 ist ein Magnetventil 37 angeordnet, in dessen Neutralstellung der Pilotstrom von dem Lenksteuerventil 6 direkt zu dem Zulaufanschluß 17 zugeführt wird.

Zwischen der zu der hydrostatischen Lenkung 2 führenden Arbeitsleitung 15 bzw. der Druckleitung der Servopumpe 8 und dem Zulaufanschluß 17 ist eine Verbindungsleitung 38 angeordnet. In die Verbindungsleitung 38 ist ein Schaltventil 39 eingeschaltet, in dessen Neutralstellung die Verbindungsleitung 38 zwischen der Servopumpe 8 und dem Zulaufanschluß 17 abgesperrt ist.

Das Magnetventil 37 weist eine Schaltstellung auf, die durch einen Schaltmagneten 40 eingestellt wird. In dieser Schaltstellung ist die Pilotstromleitung 36 über einen Durchgangskanal 41 an eine zu dem Schaltventil 39 führende Zweigleitung 42 angeschlossen. Die Zweigleitung 42 ist in der Neutralstellung des Schaltventils 39 mit der Fortsetzung 38 A der Verbindungsleitung 38 und damit mit dem Zulaufanschluß 17 verbunden. Von der Zweigleitung 42 zweigt eine Steuerleitung 43 ab zur Betätigung des Schaltventils in Abhängigkeit eines von dem Lenkautomaten 4 in der Zulaufleitung 24 und damit auch in der Zweigleitung 42 aufgebauten Druckes. In der, abhängig von dem in der Zweigleitung 42 herrschenden Druck, eingeschalteten Schaltstellung des Schaltventils 39 ist die Verbindungsleitung 38 über die Fortsetzungsleitung 38 A mit dem Zulaufanschluß 17 verbunden.

Der Rücklauf des Druckmittels von dem Rücklaufanschluß 31 zu dem Druckmittelbehälter 9 erfolgt über eine Rücklaufleitung 44.

Zweckmäßigerweise sind in der Schaltstellung des Schaltventils 39 die Verbindungsleitung 38 und die Zweigleitung 42 zusammengeführt, so daß der durch die Verbindungsleitung 38 fließende Arbeitsstrom mit dem durch die Zweigleitung 42 fließenden Pilotstrom vereinigt wird.

Soll der Arbeitsstrom zu dem Lenkautomaten auf das für den bestimmten Lenkvorgang benötigte Maß beschränkt werden können, so wird in der Verbindungsleitung 38 zwischen dem Schaltventil 39 und dem Zulaufanschluß 17 ein Strombegrenzungsventil 45 angeordnet. Dadurch kann der Reststrom einem Zweitverbraucher über die Leitung 16 zur Verfügung gestellt werden.

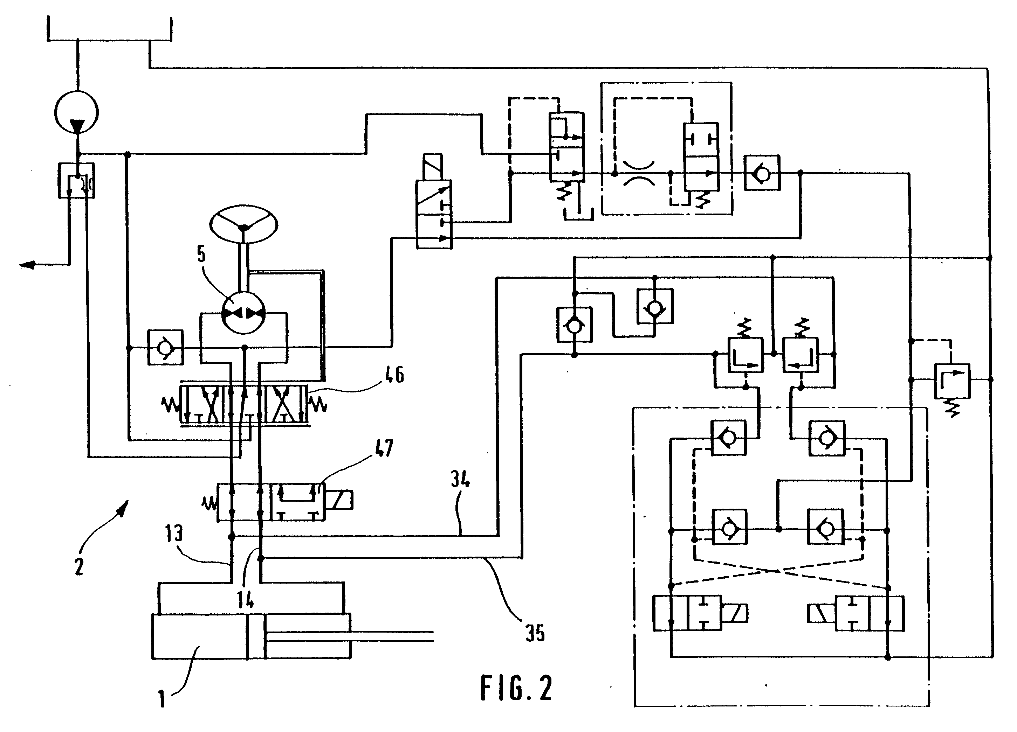

Das Ausführungsbeispiel einer Druckmittelsteuereinrichtung gemäß Fig. 2 unterscheidet sich von dem Ausführungsbeispiel nach Fig. 1 im wesentlichen dadurch, daß die hydrostatische Lenkung 2 ein Lenksteuerventil 46 mit « offener Mitte » enthält. Bei diesem Lenksteuerventil 46 besteht in der Neutralstellung eine offene Verbindung von den beiden zu dem Servomotor 1 führenden Leitungen 13 und 14 zu der Dosiereinrichtung 5. Um eine automatische Lenkung durch den Lenkautomaten 4 zu ermöglichen, ist in die Leitungen 13 und 14 ein Magnetventil 47 mit offener Neutralstellung zwischen dem Lenksteuerventil 46 und dem Verbindungspunkt der Leitungen 13 bzw. 14 mit den Arbeitsleitungen 34 bzw. 35 eingebaut. In der bei aktiviertem Lenkautomaten 4 über einen Schaltmagneten eingeschalteten Schaltstellung des Magnetventiles 47 sind die zwischen dem Magnetventil 47 und dem Servomotor 1 liegenden Teilstücke der Leitungen 13 und 14 von dem Lenksteuerventil 46 getrennt.

In der Zeichnung sind mehrere Rückschlagventile und Druckbegrenzungsventile dargestellt, die zur Funktion der Gesamtanlage erforderlich sind, jedoch nichts mit der erfindungsgemäßen Neugestaltung der Druckmittelsteuereinrichtung zu tun haben. Die Anordnung und Funktion dieser Ventile ist allgemein bekannt und wird deshalb nicht näher beschrieben.

Im folgenden wird die Funktion der Druckmittelsteuereinrichtung beschrieben :

In Neutralstellung sowohl des Lenksteuerventils 6 als auch der Hydroventileinrichtung 3 strömt ein Pilotstrom von der Servopumpe 8 über das Stromteilventil 10, die Leitung 11, den Pilotstromkanal 12 und die Pilotstromleitung 36 zu dem Zulaufanschluß 17. Von dort wird der Pilotstrom weitergeleitet über die Zulaufleitung 24 im Inneren der Hydroventileinrichtung 3. Dort wird er aufgeteilt und strömt über die beiden Zulaufventile 22 und 23 und die beiden offenen Ablaufsperrventile 29 und 30, über den Rücklaufanschluß 31 und die Rücklaufleitung 44 zum Druckmittelbehälter 9.

Bei einem durch das Lenkhandrad 7 eingeleiteten Lenkvorgang, bei dem nur die hydrostatische Lenkung 2 aktiviert wird, wird der Arbeitsdruck durch die Verstellung des Lenksteuerventils 6 über den Pilotstrom angeregt und der Arbeitsstrom von der Arbeitsleitung 15 über das Lenksteuerventil 6 in bekannter Weise dem Servomotor 1 zugeführt.

Bei nicht betätigtem Lenkhandrad 7 und bei aktiviertem Lenkautomaten 4 wird der Pilotstrom von dem Lenksteuerventil 6 über die Pilotstromleitung 36, den Durchgangskanal 41 in dem in seine Schaltstellung verstellten Magnetventil 37, die Zweigleitung 42 und das in seiner Neutralstellung befindliche Schaltventil 39 dem Zulaufanschluß 17 zugeführt. Von dort fließt der Pilotstrom nahezu drucklos über die offenen Ablaufsperrventile 29 und 30 zurück zum Druckmittelbehälter 9.

Wird nun über das nicht dargestellte Tastsystem beispielsweise das Ablaufsperrventil 29 durch Erregung des Elektromagneten 32 aus seiner offenen Neutralstellung in seine sperrende Schaltstellung verstellt, so wird in den Steuerleitungen 28 und 26 ein Druck aufgebaut. Dieser Druck entsperrt das Rückschlagventil 21 und hält das Zulaufventil 23 geschlossen. Der Druck pflanzt sich in die Zulaufleitung 24, die Verbindungsleitung 38A und die Zweigleitung 42 fort. Übersteigt der angeregte Druck einen bestimmten, durch eine Feder des Schaltventils 39 einstellbaren Wert, so wird über die Steuerleitung 43 das Schaltventil 39 in seine Schaltstellung verstellt. Dadurch kann der erforderliche Arbeitsstrom von der Servopumpe 8 über die Verbindungsleitung 38 dem Zulaufanschluß 17 zufließen. Der Arbeitsstrom wird dann weitergeleitet über die Zulaufleitung 24, das Zulaufventil 22, das Rückschlagventil 20, die Arbeitsleitung 34 und die Leitung 13 zu dem Servomotor 1. Das von dem Servomotor 1 verdrängte Rücklauföl strömt über die Leitung 14, die Arbeitsleitung 35, das aufgesteuerte Rückschlagventil 21, das Ablaufsperrventil 30 und die Rücklaufleitung 44 zu dem Druckmittelbehälter 9.

Der von der Servopumpe 8 über die Verbindungsleitung 38 dem Lenkautomaten 4 zugeführte Strom wird durch das Strombegrenzungsventil 45 auf einen durch dieses festlegbaren Wert begrenzt.

Die Funktionsweise des Ausführungsbeispieles nach Fig. 2 ist im wesentlichen identisch mit der Funktionsweise des Beispiels nach Fig. 1. Da es sich bei der Ausführung nach Fig. 2 jedoch um eine hydrostatische Lenkung mit in Neutralstellung offener Verbindung zwischen Dosierhandpumpe und Servomotor handelt, muß bei einer Aktivierung des Lenkautomaten 4 außer dem Magnetventil 37 auch noch das Magnetventil 47 erstellt werden, damit der Arbeitskreis der hydrostatischen Lenkung von dem Arbeitskreis des Lenkautomaten getrennt ist.

Bezugszeichen

1 Servomotor
2 Hydrostatische Lenkung
3 Hydroventileinrichtung
4 Lenkautomat
5 Dosiereinrichtung
6 Lenksteuerventil
7 Lenkhandrad
8 Servopumpe
9 Druckmittelbehälter
10 Stromteilventil
11 Leitung
12 Pilotstromkanal
13 Leitung
14 Leitung
15 Arbeitsleitung
16 Leitung
17 Zulaufanschluß
18 Arbeitsleitungsanschluß
19 Arbeitsleitungsanschluß
20 Rückschlagventil
21 Rückschlagventil
22 Zulaufventil
23 Zulaufventil
24 Zulaufleitung
25 Steuerleitung
26 Steuerleitung
27 Steuerleitung
28 Steuerleitung
29 Ablaufsperrventil
30 Ablaufsperrventil
31 Rücklaufanschluß
32 Elektromagnet
33 Elektromagnet
34 Arbeitsleitung
35 Arbeitsleitung
36 Pilotstromleitung
37 Magnetventil
38 Verbindungsleitung
39 Schaltventil
40 Schaltmagnet
41 Durchgangskanal
42 Zweigleitung
43 Steuerleitung
44 Rücklaufleitung
45 Strombegrenzungsventil
46 Lenksteuerventil
47 Magnetventil
48 Schaltmagnet

## Patentansprüche

1. Druckmittelsteuereinrichtung zur Steuerung eines doppelt wirkenden Servomotors (1) einer Hilfskraftlenkung, mit einer Servopumpe (8), einem Druckmittelbehälter (9) und folgenden weiteren Merkmalen :

- der Servomotor (1) ist einerseits über eine hydrostatische Lenkung (2) durch ein Lenkhandrad (7) und andererseits über einen mit einer Hydroventileinrichtung (3) versehenen Lenkautomaten (4) durch ein Tastsystem zur automatischen Seitenführung entlang einer Leitlinie betätigbar,

- die hydrostatische Lenkung (2) enthält ein Lenksteuerventil (6), durch das in dessen Neutralstellung ein durch ein Stromteilventil (10) aufrecht erhaltener, konstanter Pilotstrom über eine Pilotstromleitung (36) zu einem Zulaufanschluß (17) des Lenkautomaten strömt,

- vor dem Stromteilventil (10) zweigt eine Arbeitsleitung (15) für den Arbeitsstrom zu dem Lenksteuerventil (6) ab, die in der Neutralstellung des Lenksteuerventils abgesperrt ist,

- eine Betätigung des Servomotors (1) durch den Lenkautomaten (4) ist nur in der Neutralstellung des Lenksteuerventils (6) möglich, dadurch gekennzeichnet,

- daß eine Verbindungsleitung (38) besteht zwischen der Servopumpe (8) und dem Zulaufanschluß (17) des Lenkautomaten (4) mit einem in der Verbindungsleitung (38) angeordneten Schaltventil (39), in dessen Neutralstellung die Verbindungsleitung (38) abgesperrt ist,

- daß in der Pilotstromleitung (36) ein Magnetventil (37) angeordnet ist, in dessen Neutralstellung der Pilotstrom direkt zu dem Zulaufanschluß (17) des Lenkautomaten (4) und in dessen bei Aktivierung des Lenkautomaten (4) eingeschalteter Schaltstellung der Druck des Pilotstroms dem Schaltventil (39) über eine Zweigleitung (42) zugeführt wird,

- daß in der Neutralstellung des Schaltventils (39) eine Verbindung für den Pilotstrom besteht von dem Magnetventil (37) zu dem Zulaufanschluß (17) des Lenkautomaten (4),

- daß von der zwischen dem Magnetventil (37) und dem Schaltventil (39) angeordneten Zweigleitung (42) eine· Steuerleitung (43) abzweigt zur Betätigung des Schaltventils (39) in Abhängigkeit eines in der Zweigleitung (42) durch die Verstellung des Lenkautomaten (4) aufgebauten Druckes und

- daß in der Schaltstellung des Schaltventils (39) eine Verbindung besteht von der Servopumpe (8) zu dem Zulaufanschluß (17) des Lenkautomaten (4).

2. Druckmittelsteuereinrichtung nach Anspruch 1, dadurch gekennzeichnet, daß in der Schaltstellung des Schaltventils (39) eine gemeinsame Verbindung besteht von der Verbindungsleitung (38) und der Zweigleitung (42) zu dem Zulaufanschluß (17) des Lenkautomaten (4).

3. Druckmittelsteuereinrichtung nach Anspruch 1 oder 2, dadurch gekennzeichnet, daß zwischen dem Schaltventil (39) und dem Zulaufanschluß (17) des Lenkautomaten (4) ein Strombegrenzungsventil (45) angeordnet ist für eine Begrenzung des von dem Schaltventil (39) zu dem Lenkautomaten (4) strömenden Druckmittels.

## Claims

1. Hydraulic pressure control device for controlling a double-acting servo motor (1) of a servo-assisted steering system, with a servo pump (8), a pressure medium reservoir (9) and the following characteristics :

- the servo motor (1) can be actuated on one side by a steering wheel (7) by way of a hydrostatic steering unit (2) and on the other side by a sensing system for automatic lateral steering along a guiding line by way of an automatic steering unit (4) equipped with an hydraulic valve device (3),

- the hydrostatic steering unit (2) includes a steering control valve (6) which in its neutral position allows a constant pilot flow maintained by a flow dividing valve (10) to flow by way of a pilot flow pipe (36) to an intake port (17) on the automatic steering unit,

- upstream of the flow dividing valve (10) an operating pipe (15) for the operating flow branches off to the steering control valve (6) and is shut off when the steering control valve is in its neutral position,

- the servo motor (1) can only be actuated by the automatic steering unit (4) when the steering control valve (6) is in its neutral position, characterized in that

- a connecting pipe (38) is provided between the servo pump (8) and the intake port (17) on the automatic steering unit (4), with a control valve (39) fitted inside the connecting pipe (38) which in its neutral position shuts off the connecting pipe (38),

- in the pilot flow pipe (36) is fitted with a solenoid valve (37) which in its neutral position directs the pilot flow directly to the intake port (17) on the automatic steering unit (4), and in its switched position, which is reached when the automatic steering unit (4) is activated, directs the pressure of the pilot flow to the control valve (39) by way of a branch pipe (42),

- when the control valve (39) is in its neutral position, there is a connection for the pilot flow between the solenoid valve (37) and the intake port (17) on the automatic steering unit (4),

- a control pipe (43) branches off from the branch pipe (42) between the solenoid valve (37) and the control valve (39) to actuate the control valve (39) in relation to the pressure built up in the branch pipe (42) when the automatic steering unit (4) is moved, and

- when the control valve (39) is in its switching position there is a connection between the servo pump (8) and the intake (17) on the automatic steering unit (4).

2. Hydraulic pressure control device according to Claim 1, characterized in that when the control valve (39) is in its switched position a common connection is formed between the connecting pipe (35) and the branch pipe (42) on the one hand and the intake port (17) on the automatic steering unit (4) on the other.

3. Hydraulic pressure control device according to Claims 1 or 2, characterized in that a flow limiting valve (45) is located between the control valve (39) and the intake port (17) on the automatic steering unit (4) to restrict the flow of pressure medium from the control valve (39) to the automatic steering unit (4).

**Revendications**

1. Dispositif de commande d'un fluide de pression, pour commander un servomoteur à double action (1) dans une servodirection, comportant une servopompe (8), un réservoir de fluide (9) et les particularités suivantes :

- le servomoteur (1) est agencé pour être actionné d'une part au moyen d'un volant de direction (7) à l'aide d'une direction hydrostatique (2), et d'autre part au moyen d'un automate de direction (4) pourvu d'un ensemble (3) de soupapes hydrauliques et d'un clavier pour assurer un guidage latéral automatique le long d'une ligne directrice,

- la direction hydrostatique (2) comporte une soupape de commande de direction (6) à travers laquelle, dans sa position neutre, un courant pilote constant, maintenu par une soupape de répartition de débit (10), s'écoule par une conduite pilote (36) jusqu'à un raccord d'entrée (17) de l'automate de direction,

- une conduite de travail (15) destinée au courant de travail est dérivée en amont de ladite soupape de répartition de débit (10) et conduit à la soupape de commande de direction (6), la conduite de travail étant fermée dans la position neutre de cette soupape de commande,

- un actionnement du servomoteur (1) par l'automate de direction (4) .n'est possible que dans la position neutre de la soupape de commande de direction (6), caractérisé:

- en ce qu'il comporte une conduite de liaison (38) entre la servopompe (8) et le raccord d'entrée (17) de l'automate de direction (4), cette conduite de liaison (38) comportant une soupape de commutation (39) ayant une position neutre qui ferme la conduite de liaison (38),

- en ce que la conduite pilote (36) comporte une soupape électromagnétique (37) dont la position neutre envoie le courant pilote directement au raccord d'entrée (17) de l'automate de direction (4), et dont une position enclenchée, commandée en cas d'activation de l'automate de direction (4), envoie la pression du courant pilote à la soupape de commutation (39) par une conduite de dérivation (42),

- en ce que, dans la position neutre de la soupape de commutation (39), il existe une liaison pour le courant pilote entre la soupape électromagnétique (37) et le raccord d'entrée (17) de l'automate de direction (4),

- en ce qu'une conduite de commande (43) est dérivée de ladite conduite de dérivation (42) reliant la soupape électromagnétique (37) à la soupape de commutation (39), pour actionner la soupape de commutation (39) en fonction d'une pression créée dans la conduite de dérivation (42) par l'action de l'automate de direction (4), et

- en ce que, dans la position enclenchée de la soupape de commutation (39), il existe une liaison entre la servopompe (8) et le raccord d'entrée (17) de l'automate de direction (4).

2. Dispositif selon la revendication 1, caractérisé en ce que, dans la position enclenchée de la soupape de commutation (39), il existe une liaison commune conduisant de la conduite de liaison (38) et de la conduite de dérivation (42) au raccord d'entrée (17) de l'automate de direction (4).

3. Dispositif selon la revendication 1 ou 2, caractérisé en ce qu'il comporte, entre la soupape de commutation (39) et le raccord d'entrée (17) de l'automate de direction (4), une soupape de limitation de débit (45) pour limiter le débit du fluide allant de la soupape de commutation (39) à l'automate de direction (4).

FIG.1

0 244 418

FIG. 2